# EUROPÄISCHE PATENTANMELDUNG

(11) **EP 2 762 102 A1**
(43) Veröffentlichungstag der Anmeldung: **06.08.2014**
(21) Anmeldenummer: 13153432.3
(22) Anmeldetag: 31.01.2013
(51) Int. Cl.: A61C 5/00

(54) **Zahnverblendungselement**

(71) Anmelder: Coltène/Whaledent AG, 9450 Altstaetten (CH)
(72) Erfinder: Schlüter, Martin, 88239 Wangen (DE); Böhner, Ralf, 9451 Kriessern (DE); Besek, Mario José, 8800 Thalwil (DE); De Martis, Massimo, 9436 Balgach (DE); Moser, Remo, 9470 Buchs (DE)
(74) Vertreter: Hepp Wenger Ryffel AG

(57) **Zusammenfassung**

Die Erfindung betrifft ein Zahnverblendungselement (1) für einen Zahn (5), insbesondere zur Abdeckung einer fazialen Zahnhalsfläche (6) des Zahnes (5.1). Das Zahnverblendungselement (1) ist zur nur teilweisen Abdeckung einer fazialen Oberfläche einer Zahnkrone (5.2) des Zahnes (5.1) ausgebildet. Die Erfindung betrifft auch ein Kit mit mehreren Zahnverblendungselementen zum Verblenden von Zahnoberflächen, wobei insbesondere die Zahnverblendungselemente unterschiedliche Formen und/oder Grössen und/oder Farben und /oder Transluzenzen aufweisen. Weiter betrifft die Erfindung ein Verfahren zum Aufbringen eines derartigen Zahnverblendungselements (1) auf einen Zahn, wobei das Zahnverblendungselement (1) derart auf den Zahn aufgebracht wird, dass eine faziale Oberfläche einer Zahnkrone (5.2) des Zahns (5.1) nur teilweise abgedeckt ist, wobei insbesondere eine faziale Zahnhalsfläche (6) des Zahnes (5.1) weitgehend vollständig abgedeckt ist.

## Beschreibung

Die Erfindung betrifft ein Zahnverblendungselement, ein Verfahren zur dessen Anwendung sowie ein Kit umfassend Zahnverblendungselemente, gemäss den Oberbegriffen der unabhängigen Ansprüche.

Zahnverblendschalen, auch Veneers genannt, sind dünne Schalen in Zahnform und -farbe, die auf natürliche Zähne aufgebracht werden. Derartige Verblendschalen werden in der Regel für die gut sichtbaren Frontzähne zur nicht kurativ indizierten ästhetischen Frontzahnkorrekturen und mitunter auch für funktionelle Korrekturen angewendet.

Hierzu können z.B. vollkeramische Verblendschalen zur Anwendung kommen. Diese werden individuell in einem Labor gemäss Abformungen eines z.B. abgeschliffenen Zahnes oder Zahnstumpfes angefertigt. Die Keramikschalen werden dabei individuell auf die natürlichen Zähne des Patienten abgestimmt. Die so gefertigten Verblendschalen werden vom Zahnarzt am Zahn bzw. Zahnstumpf angebracht. Derartige Keramikschalen haben den Nachteil, dass eine Anpassung an die konkrete Situation des Patienten vor Ort nicht möglich ist. Zudem sind wenigstens zwei Zahnarztbesuche (zur Abformung und zur Applikation) erforderlich und die Anfertigung der individuellen Keramikschalen ist kostenintensiv.

Eine kostengünstigere Alternative sind direkt vom Zahnarzt hergestellte Zahnverblendungen, so genannten "chairside veneers". Diese werden z.B. aus bekannten Füllwerkstoffen wie beispielsweise Kompositmaterialien in einer Schichttechnik z.B. direkt am Zahn bzw. am Zahnstumpf aufgebaut. Dabei bestehen allerdings beträchtliche Anforderungen hinsichtlich des Farb- und Formgefühls des Zahnarztes, da dieser anstelle des Zahntechnikers im Labor vor Ort eine natürlich und ästhetisch ansprechende Form schaffen muss.

Als besonders erfolgreich und kostengünstig haben sich vorgefertigte Verblendschalen aus Kompositmaterialien erwiesen, so genannten "direct veneers", wie sie auch von der Anmelderin unter dem Namen Componeer® vertrieben werden. Derartige Verblendschalen werden üblicherweise in einer Auswahl von Formen und Farben bereitgestellt, aus welchen der Zahnarzt aufgrund der individuellen Vorgaben der Zahnsituation des Patienten auswählen kann. Die vorgefertigten Verblendschalen können mit einem Haftstoff, einem so genannten "Bond" oder "Bonding", wie z.B. einem pastösen Kompositmaterial auf den Zahn bzw. Zahnstumpf aufgebracht werden. In der Regel kommen dabei lichtpolymerisierbare Kompositmaterialien zur Anwendung, welche analog oder identisch zu bereits bekannten Füllmaterialien und/oder dem Material der Verblendschalen sind. Nach dem Aufbringen kann der Zahnarzt (im Gegensatz zu Keramikschalen) die Verblendschalen durch Schleifen und Polieren nachbearbeiten, um gesamthaft ein individuelles und ästhetisch hochwertiges Ergebnis zu erreichen. Zur Aufbringung derartiger Verblendschalen muss in der Regel der bestehende natürliche Zahn zumindest an der fazialen Oberfläche abgeschliffen und/oder angeätzt werden. Damit ist jedoch ein zum Teil nicht unerheblicher Verlust an Zahnsubstanz verbunden, welcher angesichts des in der Regel vornehmlich ästhetischen Charakters der Restauration oft unangemessen ist.

Es ist daher die Aufgabe der Erfindung, die Nachteile des Standes der Technik zu überwinden. Insbesondere ist es eine Aufgabe der Erfindung, ein kostengünstiges Zahnverblendungselement sowie ein Kit mit einem Zahnverblendungselement zu schaffen, welches vielseitig anwendbar ist und mit dessen Anwendung ein möglichst geringer Verlust an Zahnsubstanz verbunden ist. Weiter sollen das Zahnverblendungselement sowie das Kit einfach in der Herstellung sowie in der Anwendung sein. Weiter ist es eine Aufgabe der Erfindung ein Verfahren zur Aufbringung eines Zahnverblendungselements sowie eine Verwendung eines Zahnverblendungselements bereitzustellen, welche kostengünstig sowie vielseitig und einfach anwendbar sind.

Diese Aufgaben werden durch die Merkmale der unabhängigen Ansprüche gelöst. Anspruch 1 betrifft ein Zahnverblendungselement für einen Zahn, insbesondere zur Abdeckung einer fazialen Zahnhalsfläche des Zahnes. Das Zahnverblendungselement zeichnet sich dadurch aus, dass es nur zur teilweisen Abdeckung einer fazialen Oberfläche einer Zahnkrone des Zahnes ausgebildet ist.

Der Erfindung liegt unter anderem die Erkenntnis zugrunde, dass eine Zahnverblendung nicht zwingend die gesamte faziale Oberfläche des Zahnes, insbesondere der Zahnkrone, zu überdecken braucht, um ein ästhetisch befriedigendes Resultat zu erzielen. Oft befinden sich die zu kaschierenden Mängel nur in einem Teilbereich der fazialen Oberfläche des Zahnes (im Folgenden allgemein mit "lokale Mängel" bezeichnet). Wie sich herausgestellt hat, können lokale Mängel bereits durch einer Überdeckung mit einem erfindungsgemässen Zahnverblendungselement ästhetisch hochwertig restauriert werden. Moderne Materialien zur Fertigung der Zahnverblendungselemente sowie Haftstoffe (so genannte "Bonds" oder "Bondings") erlauben eine ausreichend gute Integration der Zahnverblendungselemente, sodass bei lokalen Mängeln eine vollständige Überdeckung der fazialen Oberfläche nicht erforderlich ist. Insbesondere eignet sich das erfindungsgemässe Zahnverblendungselement besonders gut zur Anwendung bei lokalen Mängeln an einer fazialen Zahnhalsfläche, d.h. in einem zervikalen Bereich des Zahns am Übergang von der Zahnkrone auf die Zahnwurzel.

Das erfindungsgemässe Zahnverblendungselement ist im Sinne eines "Teilveneers", insbesondere im zervikalen Bereich, ausgebildet, welches die faziale Oberfläche des Zahnes nach dem Aufbringen zwar im gewünschten Bereich vollständig überdeckt, andere Bereiche der fazialen Oberfläche, insbesondere der Zahnkrone, aber überdeckungsfrei lässt. Bei einer Anwendung zur Überdeckung im zervikalen Bereich ist das Zahnverblendungselement insbesondere derart ausgebildet und bemessen, dass es sich nach dem ordnungsgemässen Aufbringen in inzisaler bzw. okklusaler Richtung vom Zahnhals ausgehend nur teilweise auf die faziale Oberfläche der Zahnkrone erstreckt. Mit anderen Worten endet das Zahnverblendungselement unterhalb einer Schneidkante oder einer Kante der Kaufläche des Zahnes.

Durch die nur teilweise Überdeckung braucht der Zahn auch nur in diesen Bereichen präpariert zu werden. Die übrigen Bereiche der fazialen Zahnoberfläche brauchen dabei weder abgetragen noch anderweitig präpariert zu werden. Auf diese Weise kann erfindungsgemäss ein unnötiger Verlust von wertvollem Zahnmaterial, insbesondere des Zahnschmelzes der Zahnkrone, vermieden werden.

Das Zahnverblendungselement kann unterschiedliche Formen (z.B. Umriss in fazialer Draufsicht oder Wölbung im Querschnitt) aufweisen, welche spezifisch an den Bereich des lokalen Mangels, angrenzende umgebende Bereiche sowie an den zur Anwendung vorgesehenen Zahn angepasst sind. Insbesondere für eine Anwendung zur Überdeckung wenigstens des zervikalen Bereichs kann das Zahnverblendungselement z.B. kragenförmig ausgebildet sein, sodass es im Wesentlichen nur die Zahnhalsfläche abdeckt. Ebenso kann sich das Zahnverblendungselement etwas weiter auf die Zahnkrone erstrecken, sodass sich gesamthaft eine längliche Form ergibt. In der Regel läuft das Zahnverblendungselement in diesem Fall nach unten zusammen, da sich der Zahn im Zahnhalsbereich in der Regel gegenüber der Zahnkrone verjüngt. Je nach Zahn, für welchen das Zahnverblendungselement vorgesehen ist, kann es wenigstens in einem unteren Abschnitt oder gesamthaft eine Wölbung aufweisen, welche an den fazialen Wurzelansatz des Zahnes angepasst ist. Diese Wölbung kann sich je nach dem zur Anwendung vorgesehenen Zahn deutlich von einer Wölbung eines Abschnitts des Zahnverblendungselements unterscheiden, welcher sich gegebenenfalls auf die faziale Oberfläche der Zahnkrone erstreckt.

Das erfindungsgemässe Zahnverblendungselement ist bevorzugt zur Anwendung an den Canini (Eckzähne), den Prämolaren (Vormahlzähne) oder den Molaren (Mahlzähne) ausgebildet.

Das Zahnverblendungselement gemäss der Erfindung unterscheidet sich somit deutlich in seiner Formgebung von bekannten Zahnverblendschalen (d.h. vollständigen Veneers). Diese sind zur vollständigen Überdeckung der fazialen Oberfläche der Zahnkrone ausgebildet und entsprechen somit z.B. in Umriss, Wölbung und Oberflächengestaltung einer gesamten fazialen Oberfläche einer (allenfalls idealisierten) natürlichen Zahnkrone.

Bevorzugt ist das Zahnverblendungselement derart ausgebildet, dass wenigstens die faziale Zahnhalsfläche des Zahnes im Wesentlichen vollständig abdeckbar ist. "Im Wesentlichen" vollständig bezieht sich hierbei auf eine in der Regel nicht eindeutig festlegbare Begrenzung einerseits der fazialen Oberfläche und andererseits des zervikalen Bereichs. Als faziale Zahnhalsfläche wird vorliegend wenigstens die Zone am Übergang des Schmelzes zum Wurzelzement angesehen, welche bei frontaler Draufsicht auf den Zahn sichtbar ist.

Je nach Zahn oder Ausmass des lokalen Mangels kann es bevorzugt sein, das Zahnverblendungselement z.B. eher länglich (länger wie breit) oder kragenförmig (ähnliche Breite wie Länge bzw. breiter wie lang) auszubilden.

Vorliegend ist, sofern nicht anders vermerkt, mit "Länge" eine Dimension des Zahnverblendungselements bezeichnet, welche in einer zur Applikation vorgesehenen Ausrichtung des Zahnverblendungselement relativ zum Zahn parallel zur axialen Richtung des Zahnes ausgerichtet ist. Breite bezeichnet entsprechend eine Dimension quer zur Längsrichtung.

Bei länglicher Ausbildung ist eine Überlappung mit der Zahnkrone im Allgemeinen grösser, was z.B. für eine verbesserte Integration in die Zahnsituation des Patienten mehr Gestaltungsfreiheit für einen Übergang vom Zahnverblendungselement auf die natürliche Zahnoberfläche bereitstellen kann. Mit einer kragenförmigen Ausbildung kann die Zahnhalsfläche allenfalls gezielter überdeckt werden, sodass die natürliche Zahnkrone im Wesentlichen frei liegt bzw. nur in einer Randzone zum Zahnhals hin überdeckt ist. Es versteht sich, dass sich das Zahnverblendungselement unter Umständen bereichsweise auch bis auf die Zahnwurzel erstrecken kann.

Mit Vorteil weist das Zahnverblendungselement eine Länge von etwa 5 bis 12 mm auf. Bevorzugt liegt die Länge in einem Bereich von etwa 5.5 bis 10.5 mm. Es hat sich herausgestellt, dass mit diesem Dimensionsbereich für die meisten natürlichen Zähne eine ausreichende Abdeckung, insbesondere von freiliegenden Zahnhalsflächen, mit ausreichendem Überlapp mit der fazialen Oberfläche der Zahnkrone gewährleistet werden kann.

Bevorzugt weist das Zahnverblendungselement eine Breite von etwa 4 bis 8 mm, insbesondere 5 bis 7.5 mm, auf. Mit diesem Dimensionsbereich kann bei den meisten natürlichen Zähnen eine ausreichende Abdeckung, insbesondere von freiliegenden fazialen Zahnhalsflächen, gewährleistet werden.

Als besonders geeignet haben sich Zahnverblendungselemente herausgestellt, welche eine Kombination einer Länge von etwa 5 bis 6 mm und einer Breite von etwa 5 bis 7 mm aufweisen. Diese Dimensionskombination fällt unter die vorliegend benutzte Kategorie einer kragenförmigen Ausbildung. Als weitere, ebenfalls besonders geeignete Kombination, hat sich eine Länge im Bereich von 9 bis 10.5 mm in Verbindung mit einer Breite vom 6 bis 7.5 mm herausgestellt. Diese Dimensionskombination fällt unter die vorliegend benutzte Kategorie einer länglichen Ausbildung.

Das Zahnverblendungselement weist mit Vorteil eine Dicke von 0.2 bis 1.0 mm, insbesondere 0.3 bis 0.6 mm, auf. Auf diese Weise kann sichergestellt werden, dass ein im Zahnhalsbereich oft recht grosser Füllbedarf bereitgestellt werden kann, während an der Zahnkrone ein glatter Übergang zur natürlichen Oberfläche des Zahnes erreicht werden kann. Entsprechend kann das Zahnverblendungselement im Abschnitt, welcher für den Zahnhalsbereich vorgesehen ist dicker und im Abschnitt, welcher auf der Zahnkrone angeordnet ist, dünner ausgebildet sein.

Bevorzugt ist das Zahnverblendungselement aus einem Kompositmaterial gefertigt. Auf diese Weise kann das Zahnverblendungselement in einem einzigen Zahnarztbesuch angepasst und angebracht werden. Dabei sind dauerhaft gute mechanische Eigenschaften und eine ästhetische Restauration gewährleistet.

Geeignete Kompositmaterialien umfassen eine organische Kunststoffmatrix (organische Phase), die mit einem anorganischen, insbesondere festen, Füllstoff versetzt ist (anorganische Phase). Mit Vorteil umfassen die organische Kunststoffmatrix wenigstens ein Methylacrylat und/oder der anorganische Füllstoff wenigstens ein Glas. Als Glas kommen bevorzugt ein Bariumglas und/oder ein Strontiumglas zum Einsatz.

Weitere bevorzugte anorganische Füllstoffe sind amorphe, z.B. kugelförmige, Materialien beispielsweise auf der Basis von Mischoxiden aus SiO₂, ZrO₂ und/oder TiO₂, mikrofeine Füllstoffe, wie pyrogene Kieselsäure oder Fällungskieselsäure sowie Makro-(Partikelgrösse von etwa 5 µm bis etwa 200 µm) oder Mikrofüllstoffe (Partikelgrösse von etwa 0.5 bis etwa 5 µm), wie Quarz (Silikate, Sande), Glaskeramiken (z.B. Barium-Aluminium-Glas) oder Glaspulver mit einer durchschnittlichen Teilchengrösse von 0.5 µm bis 5 µm sowie röntgenopake Füllstoffe, wie Ytterbiumtrifluorid. Ebenso kann der Füllstoff auch so genannte Mikrofüller-Komplexe wie z.B. Hybrid-Komposite und Nanopartikel (Nano-Hybridkomposite) umfassen. Darüber hinaus können grundsätzlich auch Glasfasern, Polyamide oder Kohlenstofffasern als Füllstoffe eingesetzt werden. Die Oberfläche des Füllstoffs ist in der Regel silanisiert, um eine Verbindung mit der organischen Matrix zu ermöglichen.

Weitere geeignete polymerisierbaren mono- oder multifunktionelle Monomere der organischen Phase sind Mono(meth)acrylate, wie Methyl-, Ethyl-, Butyl-, Benzyl-, Furfuryl- oder Phenyl(meth)acrylat, mehrfunktionelle Acrylate und Methacrylate wie zum Beispiel Bisphenol-(A)-di(meth)acrylat, Bisphenol-A-Glycidylmethacrylat (bekannt als "Bis GMA", welches ein Additionsprodukt aus Methacrylsäure und Bisphenol-A-diglycidylether ist), UDMA (ein Additionsprodukt aus 2-Hydroxyethylmethacrylat und 2,2,4-Hexamethylendiisocyanat), Di- , Tri- und Tetraethylenglykoldi(meth)acrylat (wie z.B. TEGDMA), Decandiol-di(meth)acrylat, Trimethylolpropantri(meth)acrylat, Pentaerythrittetra(meth)acrylat und Butandioldi(meth)acrylat, 1,10-Decandioldi(meth)acrylat oder 1,12-Dodecandioldi(meth)acrylat. Ebenso sind organische Phasen umfassend methacrylatmodifizierte Polysiloxane bekannt.

Die Aushärtung des Kompositmaterials erfolgt aufgrund von geeigneten Initiatoren und ggf. weiterer polymerisationsfähiger Komponenten z.B. durch thermische (thermische Härtung), photochemische (Lichthärtung) oder redoxinduzierte Polymerisation (chemische Härtung). Dabei können bei Vorhandensein unterschiedlicher polymerisationsfähiger Gruppen, z. B. von (Meth)acryl- und Epoxidgruppen, auch mehrere Härtungsmechanismen, z. B. radikalische und kationische Polymerisation, gleichzeitig oder in aufeinander folgenden Stufen zur Anwendung kommen.

Bevorzugte Initiatoren für die thermische Härtung sind Peroxide, wie beispielsweise Dibenzoylperoxid, Dilaurylperoxid, tert.-Butylperoctoat und tert.-Butylperbenzoat sowie Azobisisobutyroethylester, Benzpinakol und 2,2-Dimethylbenzpinakol. Bevorzugte Photoinitiatoren sind Benzophenon und Benzoin sowie deren Derivate, α-Diketone und deren Derivate, wie beispielsweise 9,10-Phenanthrenchinon, Diacetyl und 4,4-Dichlorbenzil. Weitere bevorzugte Photoinitiatoren sind 2,2-Methoxy-2-phenyl-acetophenon und insbesondere Kombinationen von α-Diketonen mit Aminen als Reduktionsmittel, wie zum Beispiel N-Cyanoethyl-N-methylanilin, 4-(N,N-Dimethylamino)-benzoesäureester, N,N-Dimethylaminoethylmethacrylat, N,N-Dimethyl-sym.-xylidin oder Triethanolamin. Darüber hinaus sind Acylphosphine, wie zum Beispiel 2,4,6-Trimethylbenzoyldiphenyl oder Bis-(2,6-dichlorbenzoyl)-4-N-propylphenylphosphinoxid, als Photoinitiatoren geeignet. Besonders bevorzugte Photoinitiatoren sind Campherchinon, welches Licht mit einer Wellenlänge von 440 bis 480 nm absorbiert und dadurch aktivierbar ist, bzw. Phenyl-Propandiol, das durch Licht mit einer Wellenlänge von 300 bis 450 nm aktivierbar ist.

Für eine duale Aushärtung von radikalisch und kationisch polymerisierbaren Systemen eignen sich besonders Diaryliodonium oder Triarylsulfoniumsalze, wie zum Beispiel Triphenylsulfoniumhexafluorophosphat und -hexafluoroantimonat.

Als Initiatoren für eine redoxinduzierte Polymerisation (chemische Härtung) bei Raumtemperatur oder Tieftemperaturen werden Redox-Initiatorkombinationen, wie zum Beispiel Kombinationen von Benzoyl- oder Laurylperoxid mit N,N-Dimethyl-sym.-xylidin oder N,N-Dimethyl-p-toluidin, verwendet. In der Regel kommen dabei 2-Komponenten-Systeme zum Einsatz, bei welchen aufgrund einer Vermischung der beiden Komponenten der Initiator aktivierbar ist und die Polymerisation auslöst.

Das Kompositmaterial kann dabei weitere Bestandteile aufweisen wie z.B. Mono-, Di- und Triacrylate als Comonomere oder z.B. Toluidin als Beschleuniger der Photopolymerisation. Weitere Zusätze können beispielsweise Polymerisationsinhibitoren zur Vermeidung einer vorzeitigen Polymerisation wie z.B. Hydrochinon als Inhibitor einer Photopolymerisation umfassen. Weiter können weitere Additive wie Benzophenon als UV-Stabilisator, Oxidationsinhibitoren, Verlaufsmittel, Färbemittel (Pigmente und Farbstoffe), Stabilisatoren, Aromastoffe, mikrobiozide Wirkstoffe und/oder Weichmacher vorhanden sein.

Das Zahnverblendungselement umfasst mit Vorteil Zinkoxid. Zinkoxid ist als Biomaterial bekannt und wird unter anderem aufgrund seiner mikrobioziden Wirkung in biologischen Systemen angewendet. Gerade bei einer Applikation des Zahnverblendungselements im Bereich des Zahnhalses, d.h. am möglicherweise entzündeten Zahnfleisch, ist es daher vorteilhaft, das Material des Zahnverblendungselements entsprechend anzureichern und/oder zu beschichten.

Mit Vorteil kann das Zahnverblendungselement mit einer Oberflächenbehandlung versehen sein. Die Oberflächenbehandlung erfolgt insbesondere nach einem formgebenden Herstellungsschritt und kann sich auch nur auf gewisse Bereiche des Zahnverblendungselements erstrecken. Dabei kann es sich um eine Oberflächenveredelung handeln, welche insbesondere in den Bereichen aufgebracht bzw. durchgeführt wird, welche nach der Applikation sichtbar sind. Auf diese Weise ist sichergestellt, dass auch Bereiche, welche beim Aufbringen der Zahnverblendungselemente allenfalls unbearbeitet bleiben, eine hohe Oberflächengüte aufweisen.

Die Oberflächenveredelung kann beispielsweise eine Oberflächenpolitur sein. Zur Oberflächenveredelung kann aber auch eine äussere Oberfläche des Zahnverblendungselements zumindest bereichsweise laserbehandelt werden.

In anderen Oberflächenbereichen, welche beispielsweise zur Befestigung am Zahn d.h. zum Kontakt mit dem Haftstoff vorgesehen sind, kann eine Oberflächenbehandlung dazu vorgesehen sein, um die Haftung des Haftstoffes zu verbessern. In diesem Fall kann die Oberflächenbehandlung z.B. ein Aufrauen der Befestigungsflächen umfassen.

Das Zahnverblendungselement kann eine Transluzenz im Bereich von etwa 12% bis 45%, bevorzugt im Bereich von etwa 12% bis 30% aufweisen. Es hat sich herausgestellt, dass das erfindungsgemässe Zahnverblendungselement je nach Anwendung im Gegensatz zu herkömmlichen Veneers, eine geringere Transluzenz aufweisen kann. Insbesondere zur Verblendung von Zahnhalsflächen können die Zahnverblendungselemente bevorzugt einen dentinfarbenen Farbton bei geringer Transluzenz aufweisen. In diesem Fall wird z.B. eine Mehrzahl von Zahnverblendungselementen bereitgestellt, welche eine Auswahl unterschiedlicher, möglichst vielseitig anwendbarer Farbtöne aufweisen.

Es versteht sich, dass die erfindungsgemässen Zahnverblendungselemente je nach Anwendung auch transluzent ausgebildet sein können, beispielsweise falls diese zur teilweisen Verblendung der fazialen Fläche der Zahnkrone z.B. im Bereich der Schneidkante vorgesehen sind. Auf diese Weise kann, analog bekannter vollständiger Veneers, die Farbe eines darunter liegenden Haftstoffs durchscheinen, sodass bei geeigneter Farbauswahl von Haftstoff und Zahnverblendungselement die optische Wirkung eines natürlichen Zahnes mit unterschiedlich gefärbtem Dentin und Schmelz nachempfunden werden kann.

Das Zahnverblendungselement weist in jedem Fall bevorzugt eine ausreichende Durchlässigkeit für Licht auf, welches gegebenenfalls zum Aushärten des Haftstoffes eingesetzt wird. In der Regel reicht hierfür eine Transluzenz von etwa 12% aus. Typischerweise kommt beim Härten mit Licht Blaulicht im Wellenlängenbereich von 300 nm bis 500 nm zur Anwendung.

Geeignete Farbwerte und/oder Transluzenzen werden zur Abdeckung eines möglichst breiten Bedürfnisses empirisch durch Vergleiche mit unterschiedlichen natürlichen Zähnen bestimmt. Zur Definition eines Farbwerts können grundsätzlich verschiedene Farbmodelle herangezogen werden. Verbreitet und bewährt ist eine Beschreibung der Farbe im so genannten Lab-Farbraum, welcher den Bereich wahrnehmbarer Farben abdeckt. Das Lab-Farbmodell ist geräteunabhängig, d.h. die Farben sind unabhängig von der Art ihrer Erzeugung und Wiedergabetechnik definiert. Das Farbmodell ist in der EN ISO 11664-4:2008 genormt. In diesem Farbmodell weist das erfindungsgemässe Zahnverblendungselement Farbwerte auf, welche bevorzugt in den folgenden Bereichen liegen:
L-Wert im Bereich 55 bis 88;
α-Wert im Bereich von -4 bis 4.5;
b-Wert im Bereich von -2 bis 24.

Es hat sich herausgestellt, dass mit diesen Farbwerten, insbesondere im Zusammenhang mit einer Transluzenz im Bereich von 12% bis 45%, vorzugsweise im Bereich von 12% bis 30%, die erfindungsgemässen Zahnverblendungselemente, insbesondere zur Abdeckung einer Zahnhalsfläche, besonders vielseitig anwendbar sind und zu natürlich wirkenden Ergebnissen führen. Selbstverständlich sind je nach Erfordernis und Anwendung der erfindungsgemässen Zahnverblendungselemente auch andere Farbwerte denkbar. Beispielsweise haben sich bei vollständigen Zahnverblendungen L-Werte von 60 bis 66.7, α-Werte von -3.0 bis -0.3 sowie b-Werte von -1.0 bis 3.6 und, insbesondere bei einer Transluzenz von 33%-41%, bewährt. Bei erfindungsgemässen Zahnverblendungselementen, welche nicht nur zur Verblendung von Zahnhalsflächen vorgesehen sind, können je nach Erfordernis Werte analog vollständigen Zahnverblendungen bevorzugt sein.

Bevorzugt sind die Zahnverblendungselemente mit einer Platzierhilfe versehen, an welcher das Zahnverblendungselement von einem Benutzer direkt oder indirekt gehalten werden kann. Die Platzierhilfe dient dabei als vorgesehene Greifstelle, an welchem das Zahnverblendungselement z.B. mit einer Pinzette gehalten werden kann. Auf diese Weise kann das vergleichsweise kleine Zahnverblendungselement komfortabel und einfach gehandhabt werden. Die Platzierhilfe kann nach dem Aufbringen entfernt, je nachdem z.B. abgeschliffen, abgetrennt oder an einer Sollbruchstelle abgebrochen, werden.

Es versteht sich, dass eine derartige Platzierhilfe auch als eigenständiger Aspekt, z.B. bei Zahnverblendungselementen zur vollständigen Überdeckung einer fazialen Oberfläche des Zahnes, insbesondere der Zahnkrone, vorteilhaft sein kann. Mit anderen Worten betrifft ein weiterer Aspekt der Erfindung auch allgemein ein Zahnverblendungselement, insbesondere eine Veneer, welches mit einer Platzierhilfe versehen ist, an welcher das Zahnverblendungselement von einem Anwender gehalten werden kann. Es versteht sich, dass ein derartiges Zahnverblendungselement auch die vorliegend genannten, bevorzugten Merkmale einzeln oder in Kombination aufweisen kann.

Die Platzierhilfe ist mit Vorteil an das Zahnverblendungselement, insbesondere einstückig, angeformt oder an diesem befestigt, insbesondere aufgeklebt. Je nachdem kann die Platzierhilfe bei einem formgebenden Herstellungsprozess des Zahnverblendungselements als integraler Bestandteil des Zahnverblendungselements geformt werden. Alternativ kann die Platzierhilfe in einem separaten Fertigungsprozess hergestellt werden und nachträglich an dem fertig geformten Zahnverblendungselement angebracht werden.

Vorzugsweise ist die Platzierhilfe auf einer äusseren Oberfläche des Zahnverblendungselements angeordnet. Äussere Oberfläche bezeichnet hierbei eine Oberfläche, welche nach dem Aufbringen auf den Zahn fazial angeordnet ist. Auf diese Weise kann das Zahnverblendungselement zur komfortablen Ausrichtung auch beim Aufbringen auf einen Zahn an der Platzierhilfe gehalten werden. Die Platzierhilfe steht bevorzugt weitgehend senkrecht von der fazialen Oberfläche des Zahnverblendungselements ab.

Dabei ist die Platzierhilfe bevorzugt als Vorsprung ausgebildet. Der Vorsprung ist bevorzugt derart ausgestaltet, dass das Zahnverblendungselement direkt oder indirekt, z.B. mit einer Pinzette, am Vorsprung gehalten werden kann. Vorzugsweise ist die Platzierhilfe derart beschaffen, dass das Zahnverblendungselement unabhängig von seiner Ausrichtung gleichermassen gut an der Platzierhilfe gehalten werden kann. Die Platzierhilfe kann hierfür zapfenförmig, insbesondere als weitgehend kreiszylindrischer Stumpf, ausgebildet sein. Es versteht sich, dass gegebenenfalls auch andere Querschnitte der zapfenförmigen Platzierhilfe vorteilhaft sein können wie z.B. eckige oder ovale Querschnitte.

Die Platzierhilfe ist zur Entfernung vom Zahnverblendungselement vor der Endbearbeitung der Restauration vorgesehen. Mit Vorteil ist hierzu eine Sollbruchstelle zum Trennen der Platzierhilfe vom Zahnverblendungselement vorhanden. Auf diese Weise kann die Platzierhilfe nach dem Anbringen des Zahnverblendungselements einfach an der Sollbruchstelle abgetrennt, z.B. abgebrochen werden. Ein allenfalls auf dem Zahnverblendungselement verbleibender Ansatz kann in der Endbearbeitung abgeschliffen und erforderlichenfalls poliert werden. Es versteht sich, dass in Varianten keine Sollbruchstelle vorgesehen zu sein braucht und die Platzierhilfe mit einem Werkzeug wie z.B. einer Trennscheibe abtrennbar ausgebildet ist.

Es hat sich als vorteilhaft herausgestellt, dass die Sollbruchstelle eine, insbesondere die Platzierhilfe vollständig umlaufende, Abstufung zwischen dem Zahnverblendungselement und der Platzierhilfe umfasst. Insbesondere kann am Zahnverblendungselement ein Sockel ausgebildet sein, welcher über die Abstufung in die Platzierhilfe übergeht. Auf diese Weise kann sichergestellt werden, dass die nach dem Abtrennen der Platzierhilfe vorhandene Bruchstelle, welche in diesem Fall am Sockel entsteht, nicht in den Körper Zahnverblendungselements hineinreicht und nur abgeschliffen zu werden braucht (d.h. keine aufbauende Nachbearbeitung erforderlich ist). Die Sollbruchstelle kann in anderen Ausführungen z.B. auch als um die Platzierhilfe laufende oder einseitige ausgebildete Kerbe ausgebildet sein.

Dabei kann es von Vorteil sein, dass die Platzierhilfe eine Kodierung, insbesondere eine Farbkodierung, zur Identifizierung des Zahnverblendungselements aufweist. Auf diese Weise lassen sich unterschiedliche Typen von Zahnverblendungselementen optisch auf einfache Weise unterscheiden. Da die Platzierhilfe ohnehin nach dem Aufbringen des Zahnverblendungselements entfernt wird, ist eine ästhetische Wirkung der endgültigen Verblendung durch die Kodierung nicht beeinträchtigt. Die Kodierung kann z.B. ein Balkenkode umfassen und/oder, bevorzugt, eine farbliche Kodierung, welche von einem Anwender besonders einfach zu erfassen ist. Grundsätzlich kann die Kodierung auch in einem anderen Bereich des Zahnverblendungselements ausgebildet sein, wobei diese jedoch nach der Applikation des Zahnverblendungselements nicht mehr erkennbar sein sollte.

Die Erfindung stellt auch ein Kit mit mehreren Zahnverblendungselementen zur Verblendung von Zahnoberflächen bereit, wobei insbesondere die Zahnverblendungselemente unterschiedliche Formen und/oder Grössen und/oder Farben und /oder Transluzenzen aufweisen, wobei wenigstens eines der Zahnverblendungselemente als Zahnverblendungselement gemäss einem der Aspekte der Erfindung ausgebildet ist. Bevorzugt ist das wenigstens ein Zahnverblendungselement für das Aufbringen auf Canini, Prämolaren oder Molaren vorgesehen.

Bevorzugt umfasst das Kit eine Auswahl von Formen und Grössen, welche eine möglichst breit gefächerte Anwendbarkeit sicherstellen. Es hat sich herausgestellt, dass zwei unterschiedliche Grössen und zwei unterschiedliche Formen, gesamthaft also vier Varianten, für jeden Zahn in den meisten Fällen ausreichen können. Bevorzugt umfasst das Kit damit wenigstens vier Varianten eines erfindungsgemässen Zahnverblendungselements, insbesondere zwei unterschiedliche Formen und jede dieser Formen in zwei Grössen für jeden Zahn.

Ein derartiges Kit kann zudem fliessfähige und/oder dickflüssige und/oder pastöse Haftstoffe und/oder entsprechend beschaffene Füllstoffe umfassen. Diese Materialien können bereits in unterschiedlichen Farbtönen vorliegen. Alternativ oder zusätzlich können Färbemittel vorgesehen sein, welche ein nachträgliches Färben ermöglichen. Zudem können weitere Substanzen wie z.B. Haftvermittler vom Kit umfasst sein. Es versteht sich, dass in einem derartigen Kit auch Instrumente und Werkzeuge wie Pinzetten und/oder Schleifgeräte und/oder spezielle Applikationsinstrumente zum Applizieren der Zahnverblendungselemente vorhanden sein können. Ebenso können ein Farbschlüssel zur Bestimmung geeigneter Farbtöne von Zahnverblendungselementen und/oder Haft- oder Füllstoffen vorgesehen sein, sowie Schablonen zur Bestimmung geeigneter Grössen und/oder Formen der Zahnverblendungselemente. Gegebenfalls können der Farbschlüssel sowie die Schablonen mit Kodierungen, insbesondere Farbkodierungen, versehen sein, welche an den Zahnverblendungselementen vorhandenen Kodierungen entsprechen. Auf diese Weise können geeignete Zahnverblendungselemente besonders einfach von einem Anwender bestimmt werden.

Das Kit kann weiter Instruktionen für einen Benutzer zur Anwendung der Zahnverblendungselemente umfassen. Die Instruktionen können beispielsweise Angaben zur Präparation des natürlichen Zahnes umfassen, bevor das Zahnverblendungselement aufgebracht werden kann. Insbesondere können die Instruktionen auch Angaben zur Durchführung eines erfindungsgemässen Verfahrens wie vorliegend beschrieben umfassen.

Die Erfindung betrifft auch eine Verwendung eines Zahnverblendungselements, insbesondere eines Zahnverblendungselements wie vorliegend beschrieben, zur teilweisen Abdeckung einer faziale Oberfläche einer Zahnkrone des Zahns, wobei insbesondere eine faziale Zahnhalsfläche des Zahnes weitgehend vollständig abgedeckt ist. Weitere Merkmale zur Verwendung des Zahnverblendungselements ergeben sich aus der vorliegenden Beschreibung im Zusammenhang mit den weiteren Erfindungsaspekten.

Die Erfindung betrifft weiter ein Verfahren zum Aufbringen eines Zahnverblendungselements auf einen Zahn, insbesondere eines Zahnverblendungselements gemäss einem der Aspekte der Erfindung. Das Verfahren zeichnet sich dadurch aus, dass das Zahnverblendungselement derart auf den Zahn aufgebracht wird, dass eine faziale Oberfläche der Zahnkrone des Zahnes nur teilweise abgedeckt ist, wobei insbesondere eine faziale Zahnhalsfläche des Zahnes weitgehend vollständig abgedeckt ist. Das Verfahren zum Aufbringen sowie die Verwendung des Zahnverblendungselements kommen bevorzugt bei nicht kurativ indizierten ästhetischen Zahnkorrekturen zum Einsatz, d.h. zu kosmetischen Zwecken. Es versteht sich, dass im Falle von kurativ indizierten Zahnkorrekturen, wie z.B. die Behandlung von empfindlichen Zahnhälsen, grundsätzlich dasselbe Verfahren und dieselbe Verwendung wie vorliegend beschrieben zum Einsatz kommen können.

In einer bevorzugten Variante des Verfahrens wird das Zahnverblendungselement nach dem Aufbringen auf den Zahn derart abgetragen, insbesondere abgeschliffen, dass ein weitgehend glatter Übergang von dem Zahnverblendungselement auf die faziale Oberfläche der Zahnkrone entsteht. Dabei wird insbesondere ein Bereich an einer oberen, zahnkronenseitigen, Kante des Zahnverblendungselements abgetragen.

Bevorzugt kommt das Verfahren bei einem Zahnverblendungselement mit einer Platzierhilfe wie vorliegend beschrieben zur Anwendung. Dabei wird das Zahnverblendungselement während des Aufbringens zumindest zeitweise von einem Anwender direkt oder indirekt an der Platzierhilfe des Zahnverblendungselements gehalten. Auf diese Weise kann das Zahnverblendungselement auf einfache Weise manipuliert und positioniert werden.

Das Zahnverblendungselement kann beispielsweise mit einer Pinzette an der Platzierhilfe gehalten werden. Ebenso kann ein spezifisch dafür vorgesehenes Applikationsinstrument zur Anwendung kommen. Ein derartiges Applikationsinstrument kann beispielsweise an die Platzierhilfe angepasst und z.B. komplementär zu dieser ausgebildet sein. Insbesondere kann das Applikationsinstrument ein, vorzugsweise elastisches, Halteelement, insbesondere aus einem Silikon oder einem Gummi, mit einem Aufnahmeraum aufweisen, in welchen die entsprechend ausgebildete Platzierhilfe eingebracht werden kann. Bei geeigneter Abmessung des Aufnahmeraums kann die Platzierhilfe des Zahnverblendungselements somit in den Aufnahmeraum gesteckt und dort gehalten werden. Eine vorteilhafte Ausgestaltung umfasst eine zapfenförmige Ausbildung der Platzierhilfe, wobei der Aufnahmeraum als Sackloch im Haltelement ausgebildet ist. Das Applikationselement weist bevorzugt einen Griff zur einfachen Handhabung auf, mit welchem das Halteelement verbunden ist.

Mit Vorteil wird die Platzierhilfe nach dem Aufbringen des Zahnverblendungselements, insbesondere an einer Sollbruchstelle zum Trennen der Platzierhilfe vom Zahnverblendungselement, vom Zahnverblendungselement getrennt. Im Falle einer Sollbruchstelle kann die Platzierhilfe einfach abgebrochen werden. Anderenfalls kann sie z.B. maschinell mit einer Trennscheibe abgetrennt werden.

Sofern die Platzierhilfe eine Kodierung aufweist, erfolgt bevorzugt vor dem Aufbringen des Zahnverblendungselements auf den Zahn eine Auswahl eines geeigneten Zahnverblendungselements aus einer Mehrzahl von, insbesondere unterschiedlichen, Zahnverblendungselementen aufgrund der Kodierung, insbesondere einer Farbkodierung.

Die Erfindung betrifft auch ein Verfahren zur Herstellung eines Zahnverblendungselements, insbesondere eines erfindungsgemässen Zahnverblendungselements. Dabei wird ein fliessfähiges, dickflüssiges oder pastöses Kompositmaterial:
- in eine Pressform eingebracht,
- von der Pressform in eine gewünschte Form gepresst und
- anschliessend ausgehärtet.

Die zum Aushärten erforderliche Polymerisation des Kompositmaterials kann durch Aktivierung geeigneter Initiatoren im Kompositmaterial wie oben im Zusammenhang mit dem Kompositmaterial beschrieben initiiert werden.

Je nachdem kann nach dem Aushärten eine Platzierhilfe am Zahnverblendungselement angebracht werden. Bevorzugt wird die Platzierhilfe jedoch direkt bei der Herstellung des Zahnverblendungselements angeformt. Die Platzierhilfe kann mit einer Kodierung, insbesondere einer Farbkodierung, versehen sein bzw. nach dem Aushärten oder gegebenenfalls dem Anbringen versehen werden.

Beim Anformen der Platzierhilfe kann gleichzeitig die erwähnte Sollbruchstelle zum Trennen der Platzierhilfe vom Zahnverblendungselement ausgebildet werden. Hierzu kann die Pressform entsprechend ausgebildet sein.

Bevorzugt dient ein ohnehin vorhandener Entlüftungskanal der Pressform, über welchen beim Pressen überschüssige Luft aus der Pressform entweichen kann, als Form zur Ausbildung der Platzierhilfe. Der Entlüftungskanal ist bevorzugt derart angeordnet und ausgebildet, dass beim Pressen in den Entlüftungskanal eintretendes Kompositmaterial nach dem Aushärten die Platzierhilfe bereitstellen kann. Gegebenenfalls wird das Kompositmaterial hierzu in etwas grösserer Menge in die Pressform eingebracht, als es zur Fertigung des Zahnverblendungselements alleine, d.h. ohne Platzierhilfe, erforderlich wäre.

Der Entlüftungskanal mündet hierzu bevorzugt an einer Pressfläche der Pressform, welche eine als faziale Fläche vorgesehene Aussenseite des späteren Zahnverblendungselements formt, in einen Pressraum der Pressform. Die Erfindung betrifft somit in einem weiteren Aspekt auch eine Pressform zur Herstellung eines Zahnverblendungselements, bei welcher ein Entlüftungskanal an einer Pressfläche der Pressform in einen Pressraum der Pressform mündet, welche Pressfläche zur Formung einer als faziale Fläche vorgesehene Aussenseite des späteren Zahnverblendungselements vorgesehen ist. Der Entlüftungskanal weist bevorzugt eine zur späteren Platzierhilfe komplementäre Form auf, bildet mit anderen Worten eine Negativform für die Platzierhilfe. Insbesondere kann der Entlüftungskanal eine Abstufung aufweisen, welche an der Platzierhilfe eine als Abstufung ausgebildete Sollbruchstelle ergibt. Der Entlüftungskanal ist bevorzugt im Querschnitt grösser als zur Entlüftung alleine erforderlich ausgebildet.

Aus der nachfolgenden Detailbeschreibung und der Gesamtheit der Patentansprüche ergeben sich zudem weitere vorteilhafte Ausführungsformen und Merkmalskombinationen der Erfindung.

Die zur Erläuterung der Ausführungsbeispiele verwendeten Zeichnungen zeigen schematisch:
- Fig. 1:: eine Aussenansicht eines erfindungsgemässen Zahnverblendungselements zur Verblendung eines zervikalen Bereichs eines Zahnes mit einer Platzierhilfe;
- Fig. 2:: eine exemplarische Querschnittsansicht durch das Zahnverblendungselement der Fig. 1;
- Fig. 3:: eine Ansicht einer Zahnsituation eines Patienten während des Aufbringens des Zahnverblendungselements gemäss Fig. 1;
- Fig. 4:: eine Ansicht einer Zahnsituation eines Patienten nach dem Aufbringen des Zahnverblendungselements mit entfernter Platzierhilfe, vor der Endbearbeitung;
- Fig. 5:: eine Ausschnittsansicht eines erfindungsgemässen Zahnverblendungselements mit einer Platzierhilfe mit einer Sollbruchstelle;
- Fig. 6a-6f:: sechs Hauptansichten einer weiteren Ausführungsform eines erfindungsgemässen Zahnverblendungselements zur Verblendung eines zervikalen Bereichs eines Zahnes mit einer Platzierhilfe mit Sollbruchstelle;
- Fig. 7a-7f:: sechs Hauptansichten einer weiteren Ausführungsform eines erfindungsgemässen Zahnverblendungselements zur Verblendung eines zervikalen Bereichs eines Zahnes mit einer Platzierhilfe mit Sollbruchstelle;
- Fig. 8a-8f:: sechs Hauptansichten einer weiteren Ausführungsform eines erfindungsgemässen Zahnverblendungselements zur Verblendung eines zervikalen Bereichs eines Zahnes mit einer Platzierhilfe mit Sollbruchstelle;
- Fig. 9a-9f:: sechs Hauptansichten einer weiteren Ausführungsform eines erfindungsgemässen Zahnverblendungselements zur Verblendung eines zervikalen Bereichs eines Zahnes mit einer Platzierhilfe mit Sollbruchstelle.

In den Figuren sind gleichartige Elemente mit gleichen Bezugszeichen versehen.

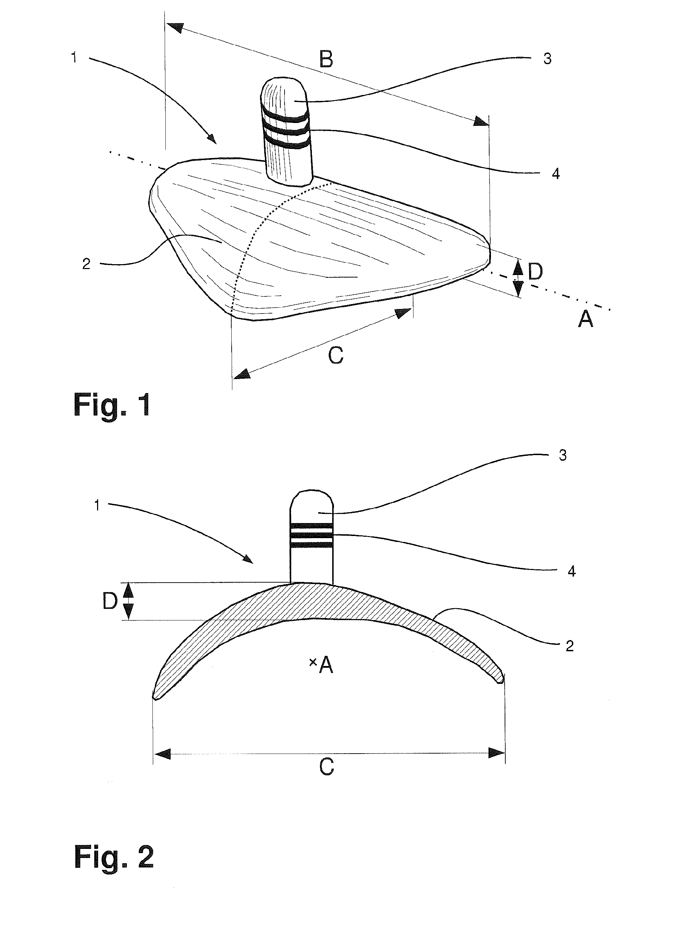

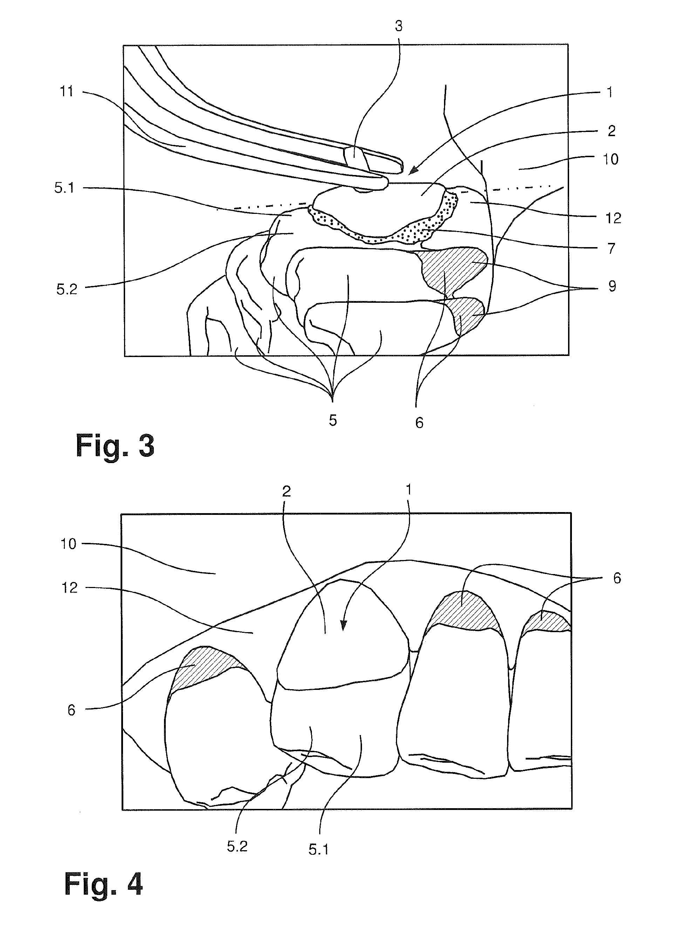

Figur 1 zeigt eine schematische Aussenansicht eines erfindungsgemässen Zahnverblendungselements 1. Figur 1 gibt eine Schrägansicht wieder. Zur Illustration einer Wölbung das Zahnverblendungselements 1 sind Oberflächenlinien eingezeichnet, welche allerdings keine konkrete Oberflächenstrukturierung wiedergeben sollen. Das Zahnverblendungselement 1 ist bezüglich einer Längsachse A um diese gewölbt (siehe hierzu auch Fig. 2, sowie 6a bis 6f, 7a bis 7f, 8a bis 8f, 9a bis 9f). Die Längsachse A ist in einer Projektion auf die faziale Oberfläche des Zahnes 5.1 längs einer Längsachse des Zahnes 5.1 ausgerichtet, wenn das Zahnverblendungselement 1 in einer zur Applikation vorgesehenen Ausrichtung angeordnet ist (siehe z.B. Fig. 3).

Das Zahnverblendungselement 1 weist eine Länge B in Richtung der Längsachse A im Bereich von etwa 5 bis 12 mm auf. Senkrecht zur Längsrichtung A weist das Zahnverblendungselement 1 eine Breite C im Bereich von etwa 4 bis 8 mm auf. Eine Dicke D des Zahnverblendungselements 1 beträgt etwa 0.2 bis 1.0 mm, insbesondere 0.3 bis 0.6 mm. Es versteht sich, dass die Dicke D dabei je nach Messposition am Zahnverblendungselement 1 variieren kann. Insbesondere kann z.B. eine Dicke in einem zahnkronenseitigen Bereich dünner sein, als in einem wurzelseitigen Bereich, wo möglicherweise mehr Materialauftrag erwünscht ist.

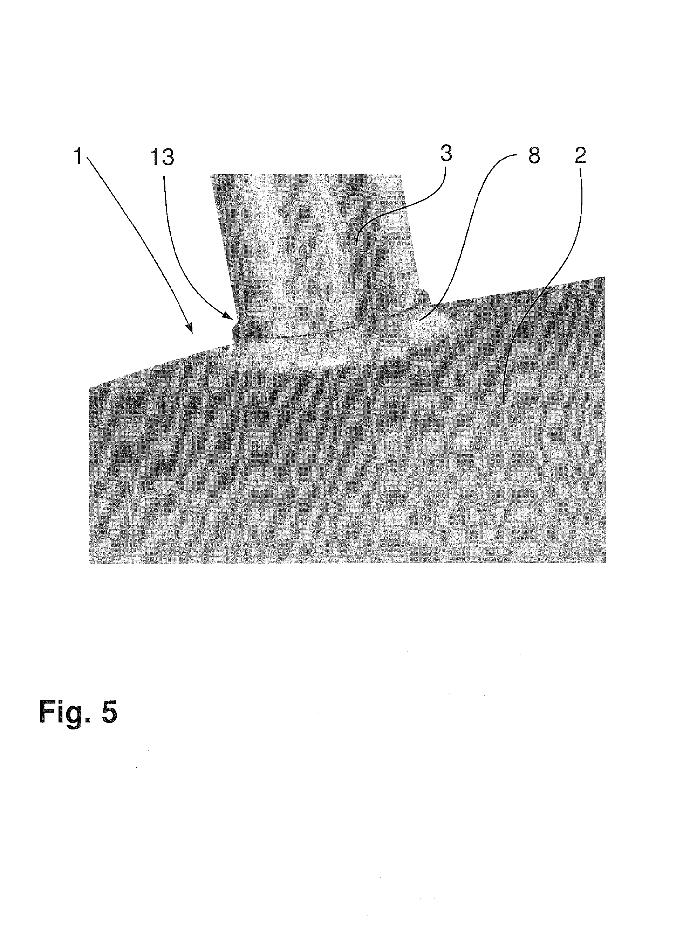

Auf einer äusseren Oberfläche 2 des Zahnverblendungselements 1, welche nach dem Aufbringen zu einer fazialen Oberfläche des restaurierten Zahnes bearbeitet wird, ist eine Platzierhilfe 3 angeordnet. Diese ist in einem zentralen Bereich der Oberfläche 2 angeordnet und auf dieser befestigt oder angeformt. Die Platzierhilfe 3 ist vorliegend als weitgehend kreiszylinderförmiger Stumpf ausgebildet, welche im Wesentlichen senkrecht zur Oberfläche 2 angeordnet ist. Die Platzierhilfe 3 ist nur zur Benutzung während des Aufbringens bzw. während der Präparation des Zahnverblendungselements 1 vorgesehen. Nach dem Aufbringen kann die Platzierhilfe 3 entfernt werden, z.B. an einer Sollbruchstelle abgebrochen (siehe hierzu Fig. 5) oder mit einem Schleif- oder Trennwerkzeug abgetrennt werden.

An der Platzierhilfe 3 ist vorliegend eine Kodierung 4 in der Form von mehreren umlaufenden Ringen aufgebracht. Die Ringe können dabei unterschiedliche Farben aufweisen, um beispielsweise eine Grösse oder eine Farbe des Zahnverblendungselements 1 anzuzeigen. Dies erleichtert dem Anwender eine Identifizierung unterschiedlicher Zahnverblendungselemente 1. Es versteht sich, dass die Kodierung 4 auch auf andere Weise ausgebildet sein kann und z.B. unterschiedlich breite Ringe derselben Farbe oder eine Beschriftung mit einem Zahlenkode umfasst. Indem die Platzierhilfe 3 vor der Endbearbeitung der Restauration ohnehin entfernt werden muss, beeinträchtigt die Kodierung 4 die ästhetische Qualität des Zahnverblendungselements 1 im Endergebnis nicht.

Figur 2 zeigt schematisch eine exemplarische Schnittansicht durch das Zahnverblendungselement 1 der Fig. 1. Die Schnittansicht liegt in einer Ebene senkrecht zur Längsrichtung A (gestrichelte Linie in Fig. 1). Es versteht sich, dass die Ausgestaltung des Zahnverblendungselements 1 wie z.B. eine Wölbung, Dicke oder Oberflächenstrukturierung je nachdem für welche Zähne bzw. für welche Bereiche der Zähne es vorgesehen ist, variieren kann.

Figur 3 zeigt schematisch eine Ansicht einer Zahnsituation eines Patienten beim Aufbringen des Zahnverblendungselements 1 durch einen Anwender wie z.B. einen Zahnarzt. Figur 3 zeigt mehre Zähne 5 des Patienten, welche noch unbehandelt sind. An den Zahnhälsen 9 der Zähne 5 sind in einem zervikalen Bereich freiliegende faziale Zahnhalsflächen 6 erkennbar, wie sie z.B. aufgrund eine Rückgangs des Zahnfleisches 12 entstehen können. In der Darstellung der Fig. 3 ist der restliche Mundraum zur Abschirmung abgedeckt, z.B. durch einen Kofferdam 10.

Auf einem Zahn 5.1 der Zähne 5 wird ein mit einer Pinzette 11 an der Platzierhilfe 3 gehaltenes Zahnverblendungselement 1 mit einem Haftstoff 7 derart platziert, dass eine freiliegende Zahnhalsfläche des Zahnes 5.1 vollständig überdeckt ist. Figur 3 zeigt eine Situation beim Positionieren des Zahnverblendungselements 1. Wie erkennbar ist, überdeckt das Zahnverblendungselement 1 zwar teilweise eine faziale Oberfläche einer Zahnkrone 5.2 des Zahnes 5.1. Das Zahnverblendungselement 1 erstreckt sich aber in Richtung zu einer Schneidkante des Zahnes 5.1 nur bis zu etwa 2/3 der axialen Länge der Zahnkrone 5.2. Der übrige Bereich der fazialen Oberfläche der Zahnkrone 5.2 bis hin zur Schneikante bleibt überdeckungsfrei. Der freiliegende Bereich der Zahnkrone 5.2 muss daher auch nicht präpariert werden. Insbesondere muss kein Zahnschmelz abgetragen werden.

Zwischen dem Zahnverblendungselement 1 und dem Zahn 5.1 ist ein Haftstoff 7 angeordnet (gepunktet). Dieser quillt vorliegend zum Teil zwischen dem Zahnverblendungselement 1 und dem Zahn 5.1 hervor. Der überschüssige Haftstoff 7 wird vor einem Aushärten des Haftstoffes 7 entfernt.

Figur 4 zeigt eine Zahnsituation des Patienten nach der korrekten Positionierung des Zahnverblendungselements 1 am Zahn 5.1. Der überschüssige Haftstoff 7 wurde entfernt und der verbleibende Haftstoff 7 zwischen Zahnverblendungselement 1 und Zahn 5.1 ausgehärtet. Wie erwähnt wird dies bei gängigen Haftstoffen 7, welche z.B. von bekannten Füllstoffen aus Kompositmaterial bereitgestellt werden, typischerweise durch Bestrahlung mit Licht im Bereich von 300 - 500 nm erreicht (Lichtpolymerisation). Hierzu ist das Zahnverblendungselement 1 für das erforderliche Licht möglichst durchlässig, damit ausreichende Einstrahlung in den Haftstoff 7 erfolgen kann.

Figur 4 zeigt die Zahnsituation vor der abschliessenden Bearbeitung der Restauration. Ein Übergang vom Zahnverblendungselement 1 auf die Oberfläche der Zahnkrone 5.2 ist noch nicht abgeschliffen und die faziale Oberfläche des restaurierten Zahnes 5.1 ist noch nicht poliert. Allerdings wurde bereits die Platzierhilfe 3 vom Zahnverblendungselement 1 entfernt. Die weiteren Zähne 5 sind ohne Restauration, d.h. Zahnverblendungen dargestellt. Klar erkennbar sind die vom Zahnfleisch 12 freigegebenen Zahnhalsflächen 6, welche in der weiteren Behandlung mit Zahnverblendungselementen 1 analog dem Zahn 5.1 überdeckt werden können.

Figur 5 zeigt eine Ausschnittsansicht des erfindungsgemässen Zahnverblendungselements 1 mit der Platzierhilfe 3. Auf der fazialen Oberfläche 2 des Zahnverblendungselements 1 ist ein kreisförmiger Sockel 8 ausgebildet, welcher über die faziale Oberfläche 2 erhaben ist. Der Sockel 8 weist zum Zahnverblendungselement 1 hin konkav auseinander laufende Flanken auf.

Vom Sockel 8 weg erstreckt sich die Platzierhilfe, welche als kreiszylindrischer Stumpf ausgebildet ist, weitgehend senkrecht zur Oberfläche 2 vom Zahnverblendungselement 1 weg. Am Übergang vom Sockel 8 zur Platzierhilfe 3 ist eine Abstufung 13 ausgebildet, an welcher eine sprunghafte Verjüngung vom Querschnitt des Sockels 8 zum Querschnitt der Platzierhilfe 3 erfolgt. Die Abstufung erstreckt sich bezüglich einer Längsachse der Platzierhilfe 3 um die gesamte Platzierhilfe 3 herum.

Die Abstufung 13 bildet eine Sollbruchstelle, an welcher die Platzierhilfe 3 vom Sockel 8 trennbar ist. Insbesondere kann die Platzierhilfe 3 bei feststehendem Zahnverblendungselement 1, d.h. z.B. nach einer erfolgreichen Applikation an einem Zahn, an der Sollbruchstelle abgebrochen werden. Der Sockel 8 verbleibt dabei am Zahnverblendungselement 1. Der Sockel 8 verhindert somit, dass beim Trennen allfällig ausgebrochene Bereiche in den Körper des Zahnverblendungselements 1 hineinreichen. Da der Sockel 8 bei der Endbearbeitung ohnehin entfernt, d.h. z.B. weg geschliffen und/oder -poliert, wird, beeinträchtigen allfällige Ausbrüche am Sockel 8 die Qualität des Endergebnisses nicht.

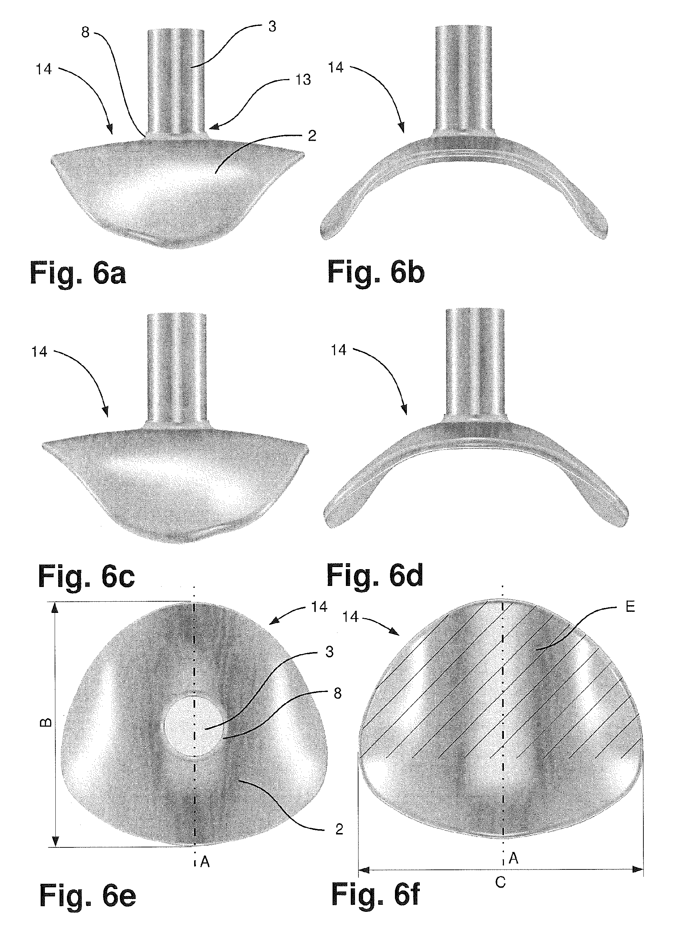

Die Figuren 6a bis 6f zeigen sechs Hauptansichten einer weiteren Ausführungsform eines erfindungsgemässen Zahnverblendungselements 14 zur Verblendung eines zervikalen Bereichs eines Zahnes mit der Platzierhilfe 3 und der Sollbruchstelle 13. Der Sockel 8 ist in einem mittigen Bereich der äusseren Oberfläche 2 des Zahnverblendungselements 14 angeordnet. Die Sollbruchstelle 13 ist als Abstufung zwischen dem Sockel 8 und der Platzierhilfe 3 ausgebildet. In den Draufsichten der Fig. 6e und 6f ist erkennbar, dass die axiale Länge B in Richtung von A kleiner ist, als die Breite C in Richtung senkrecht zu A. Insbesondere weist das Zahnverblendungselement 14 eine Länge B von 5.8 mm und eine Breite C von 6.7 mm auf. Ein derartiges Verhältnis von Länge B zu Breite C fällt in die vorliegend benutzte Kategorie einer kragenförmigen Ausbildung eines erfindungsgemässen Zahnverblendungselements.

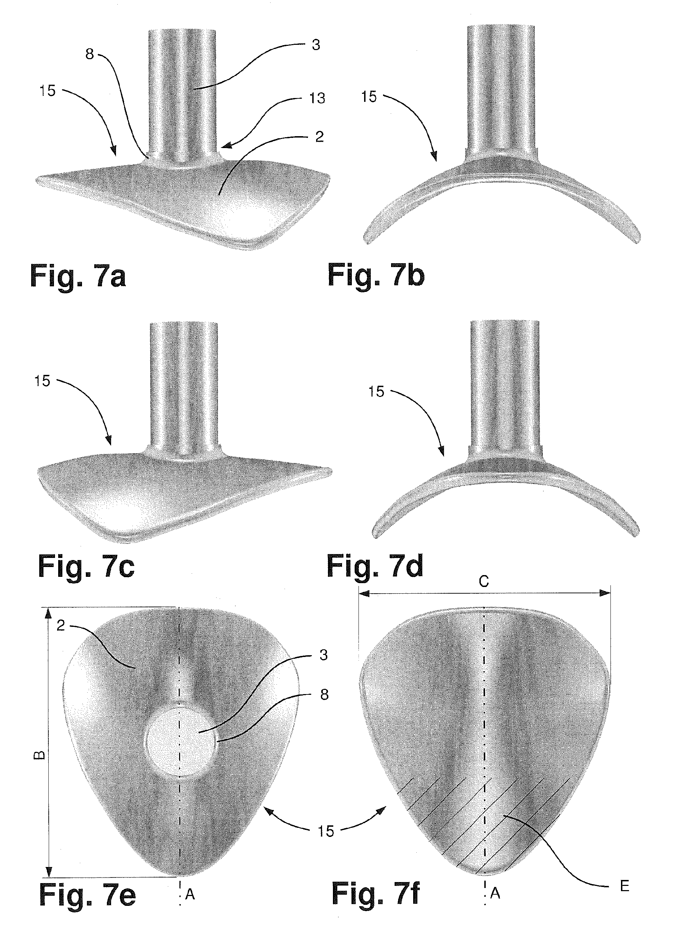

Die Figuren 7a bis 7f zeigen sechs Hauptansichten einer weiteren Ausführungsform eines erfindungsgemässen Zahnverblendungselements 15 zur Verblendung eines zervikalen Bereichs eines Zahnes mit der Platzierhilfe 3 mit der Sollbruchstelle 13. In den Draufsichten der Fig. 7e und 7f ist ersichtlich, dass die axiale Länge B in Richtung von A in einem ähnlichen Bereich liegt, wie die Breite C in Richtung senkrecht zu A. Insbesondere weist das Zahnverblendungselement 15 eine Länge B von 5.6 mm und eine Breite C von 5.1 mm auf. Ein derartiges Verhältnis von Länge B zu Breite C wird vorliegend ebenfalls noch als eine kragenförmige Ausbildung angesehen.

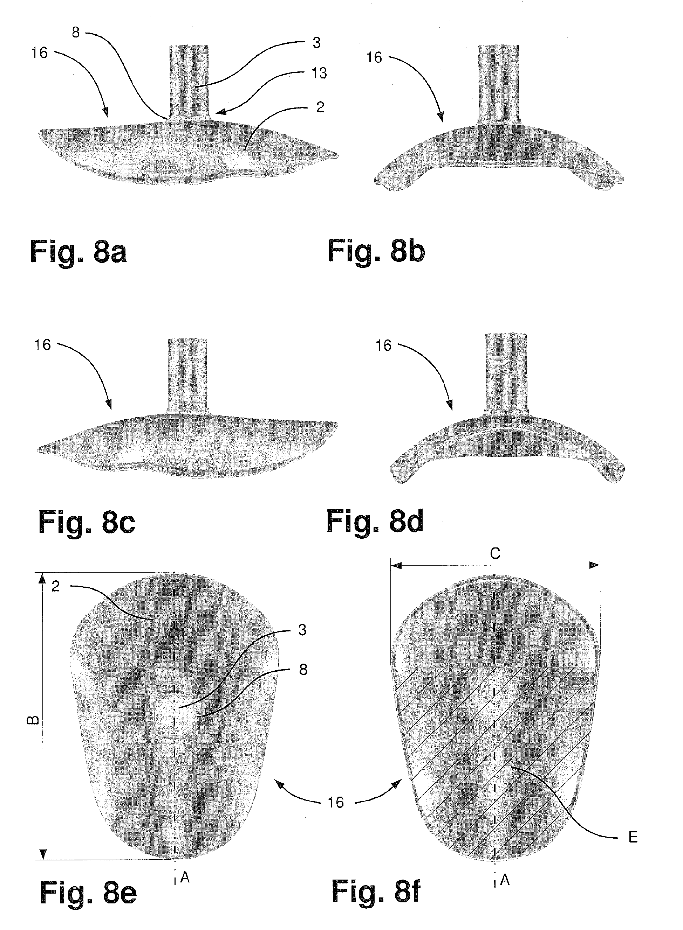

Die Figuren 8a bis 8f zeigen sechs Hauptansichten einer weiteren Ausführungsform eines erfindungsgemässen Zahnverblendungselements 16 zur Verblendung eines zervikalen Bereichs eines Zahnes mit der Platzierhilfe 3 mit der Sollbruchstelle 13. Die axiale Länge B in Richtung von A des Zahnverblendungselements 16 ist deutlich grösser, als die Breite C in Richtung senkrecht zu A. Insbesondere weist das Zahnverblendungselement 16 eine Länge B von 10.1 mm und eine Breite C von 7.5 mm auf. Ein derartiges Verhältnis von Länge B zu Breite C fällt in die vorliegend benutzte Kategorie einer länglichen Ausbildung eines erfindungsgemässen Zahnverblendungselements.

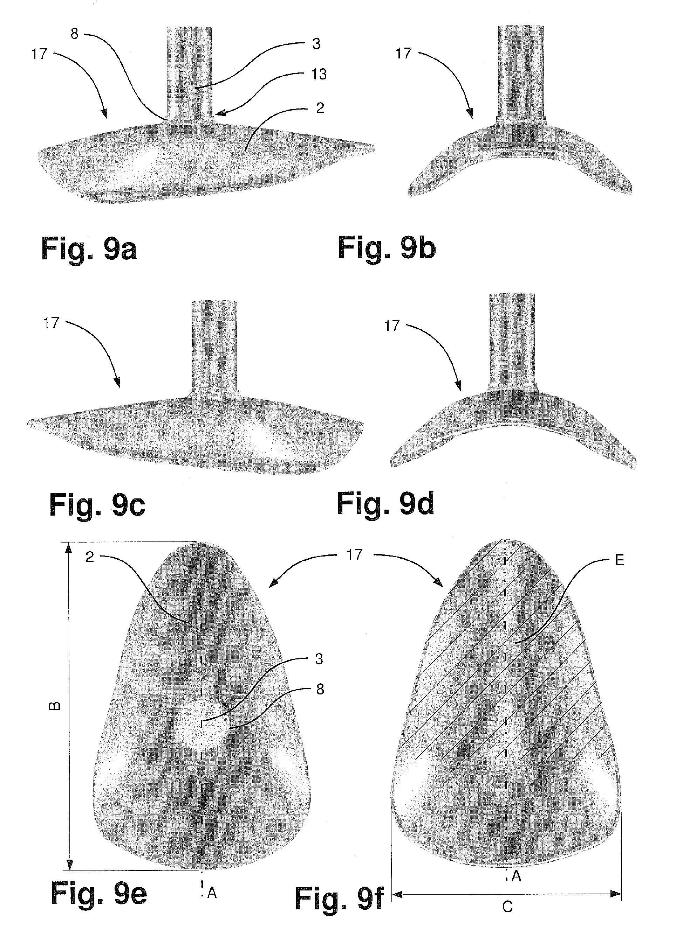

Die Figuren 9a bis 9f zeigen sechs Hauptansichten einer weiteren Ausführungsform eines erfindungsgemässen Zahnverblendungselements 17 zur Verblendung eines zervikalen Bereichs eines Zahnes mit der Platzierhilfe 3 mit der Sollbruchstelle 13. Die axiale Länge B in Richtung von A des Zahnverblendungselements 17 ist deutlich grösser, als die Breite C in Richtung senkrecht zu A. Insbesondere weist das Zahnverblendungselement 17 eine Länge B von 9.4 mm und eine Breite C von 6.6 mm auf. Ein derartiges Verhältnis von Länge B zu Breite C wird vorliegend ebenfalls als eine längliche Ausbildung bezeichnet.

Wie aus den Abbildungen der Zahnverblendungselemente 14 bis 17 hervorgeht, weisen diese jeweils wenigstens zwei Bereiche auf, welche unterschiedliche Wölbungen um die Längsrichtung A aufweisen. In den Fig. 6f, 7f, 8f und 9f ist jeweils ein Bereich E schraffiert angedeutet, welcher bei ordnungsgemässer Anordnung des jeweiligen Zahnverblendungselements 14 bis 17 wurzelseitig angeordnet ist. Da die Zahnverblendungselemente 14 bis 17 zur Überdeckung einer fazialen Zahnhalsfläche ausgebildet sind, erstrecken sich diese in aufgebrachtem Zustand sowohl teilweise auf die Zahnwurzel sowie auf die Zahnkrone. Diese Bereiche des Zahnes weisen in der Regel unterschiedliche Krümmungen quer zur Längsrichtung des Zahnes auf. Die Bereiche unterschiedlicher Wölbung der Zahnverblendungselemente 14 bis 17 sind daher jeweils an den zur Verblendung vorgesehenen Zahn bzw. die Zahnbereiche, auf welchen die Bereiche angeordnet werden, angepasst.

## Patentansprüche

1. Zahnverblendungselement (1) für einen Zahn (5), insbesondere zur Abdeckung einer fazialen Zahnhalsfläche (6) des Zahnes (5.1), **dadurch gekennzeichnet, dass** es nur zur teilweisen Abdeckung einer fazialen Oberfläche einer Zahnkrone (5.2) des Zahnes (5.1) ausgebildet ist.

2. Zahnverblendungselement (1) gemäss Anspruch 1, **dadurch gekennzeichnet, dass** es derart ausgebildet ist, dass die faziale Zahnhalsfläche (6) des Zahnes (5.1) im Wesentlichen vollständig abdeckbar ist.

3. Zahnverblendungselement (1), insbesondere gemäss einem der Ansprüche 1 oder 2, **dadurch gekennzeichnet, dass** es eine Länge von etwa 5 bis 12 mm, insbesondere von etwa 5.5 bis 10.5 mm, aufweist.

4. Zahnverblendungselement (1) gemäss einem der Ansprüche 1 bis 3, **dadurch gekennzeichnet, dass** eine Breite von etwa 4 bis 8 mm, insbesondere von etwa 5 bis 7.5 mm, aufweist und vorzugsweise eine Dicke von etwa 0.2 bis 1.0 mm, insbesondere von etwa 0.3 bis 0.6 mm, aufweist.

5. Zahnverblendungselement (1) gemäss einem der Ansprüche 1 bis 4, **dadurch gekennzeichnet, dass** aus einem Kompositmaterial gefertigt ist.

6. Zahnverblendungselement (1) gemäss einem der Ansprüche 1 bis 5, **dadurch gekennzeichnet, dass** es Zinkoxid umfasst.

7. Zahnverblendungselement (1) gemäss einem der Ansprüche 1 bis 6, wobei es eine Transluzenz im Bereich von 12% bis 45%, insbesondere im Bereich von 12% bis 30%, aufweist, und insbesondere Farbwerte des Zahnverblendungselements im Lab-Farbraum die folgenden Werte aufweisen:
- L-Wert im Bereich 55 bis 88;
- α-Wert im Bereich von -4 bis 4.5;
- b-Wert im Bereich von -2 bis 24.

8. Zahnverblendungselement (1) für einen Zahn (5), insbesondere gemäss einem der Ansprüche 1 bis 7, **dadurch gekennzeichnet, dass** es mit einer Platzierhilfe (3) versehen ist, an welcher das Zahnverblendungselement (1) von einem Anwender direkt oder indirekt gehalten werden kann.

9. Zahnverblendungselement (1) gemäss Anspruch 8, **dadurch gekennzeichnet, dass** die Platzierhilfe (3) an das Zahnverblendungselement (1) angeformt oder nachträglich an diesem befestigt, insbesondere aufgeklebt, ist.

10. Zahnverblendungselement (1) gemäss einem der Ansprüche 8 oder 9, **dadurch gekennzeichnet, dass** die Platzierhilfe (3) auf einer äusseren Oberfläche (2) des Zahnverblendungselements (1) angeordnet und insbesondere als Vorsprung, vorzugsweise zapfenförmig, insbesondere als weitgehend kreiszylindrischer Stumpf, ausgebildet ist.

11. Zahnverblendungselement (1) gemäss einem der Ansprüche 8 bis 10, **dadurch gekennzeichnet, dass** eine Sollbruchstelle zum Trennen der Platzierhilfe vom Zahnverblendungselement vorhanden ist.

12. Zahnverblendungselement gemäss Anspruch 11, **dadurch gekennzeichnet, dass** die Sollbruchstelle eine, insbesondere die Platzierhilfe vollständig umlaufende, Abstufung zwischen dem Zahnverblendungselement und der Platzierhilfe umfasst.

13. Zahnverblendungselement (1) gemäss einem der Ansprüche 8 bis 12, **dadurch gekennzeichnet, dass** die Platzierhilfe (3) eine Kodierung (4), insbesondere eine Farbkodierung, zur Identifizierung des Zahnverblendungselements (1) aufweist.

14. Kit mit mehreren Zahnverblendungselementen zum Verblenden von Zahnoberflächen, wobei insbesondere die Zahnverblendungselemente unterschiedliche Formen und/oder Grössen und/oder Farben und /oder Transluzenzen aufweisen, wobei wenigstens eines der Zahnverblendungselemente (1) gemäss einem der vorherigen Ansprüche ausgebildet ist.

15. Verwendung eines Zahnverblendungselements (1), insbesondere eines Zahnverblendungselements (1) gemäss einem der Ansprüche 1 bis 13, zur nur teilweisen Abdeckung einer faziale Oberfläche einer Zahnkrone (5.2) des Zahns (5.1), wobei insbesondere eine faziale Zahnhalsfläche (6) des Zahnes (5.1) weitgehend vollständig abgedeckt ist.

16. Verfahren zum Aufbringen eines Zahnverblendungselements (1), insbesondere eines Zahnverblendungselements (1) gemäss einem der Ansprüche 1 bis 13, auf einen Zahn, **dadurch gekennzeichnet, dass** das Zahnverblendungselement (1) derart auf den Zahn aufgebracht wird, dass eine faziale Oberfläche einer Zahnkrone (5.2) des Zahns (5.1) nur teilweise abgedeckt wird, wobei insbesondere eine faziale Zahnhalsfläche (6) des Zahnes (5.1) weitgehend vollständig abgedeckt wird.

17. Verfahren gemäss Anspruch 16, **dadurch gekennzeichnet, dass** das Zahnverblendungselement (1) nach dem Aufbringen auf den Zahn (5.1) derart abgetragen, insbesondere abgeschliffen, wird, dass ein weitgehend glatter Übergang von dem Zahnverblendungselement (1) auf die faziale Oberfläche der Zahnkrone (5.2) entsteht.

18. Verfahren zum Aufbringen eines Zahnverblendungselements (1) mit einer Platzierhilfe (3), insbesondere eines Zahnverblendungselements gemäss einem der Ansprüche 8 bis 13, **dadurch gekennzeichnet, dass** das Zahnverblendungselement (1) während des Aufbringens zumindest zeitweise von einem Anwender direkt oder indirekt an der Platzierhilfe (3) des Zahnverblendungselements (1) gehalten wird.

19. Verfahren gemäss Anspruch 18, **dadurch gekennzeichnet, dass** die Platzierhilfe (3) nach dem Aufbringen des Zahnverblendungselements (1), insbesondere an einer Sollbruchstelle zum Trennen der Platzierhilfe vom Zahnverblendungselement (1), vom Zahnverblendungselement (1) getrennt wird.

20. Verfahren gemäss einem der Ansprüche 18 bis 19, **dadurch gekennzeichnet, dass** vor dem Aufbringen des Zahnverblendungselements (1) auf den Zahn (5.1) eine Auswahl eines geeigneten Zahnverblendungselements aus einer Mehrzahl von, insbesondere unterschiedlichen, Zahnverblendungselementen aufgrund einer Kodierung (4) der Platzierhilfe (3) des Zahnverblendungselements (1), insbesondere einer Farbkodierung, erfolgt.
